Europäisches Patentamt

European Patent Office

Office européen des brevets

(11) Veröffentlichungsnummer: **0 211 966**
**A1**

(12) **EUROPÄISCHE PATENTANMELDUNG**

(21) Anmeldenummer: 85109455.7

(22) Anmeldetag: 27.07.85

(51) Int. Cl.4: **B60N 3/04** , A47G 27/04

(43) Veröffentlichungstag der Anmeldung:
04.03.87 Patentblatt 87/10

(84) Benannte Vertragsstaaten:
AT BE CH DE FR GB IT LI LU NL SE

(71) Anmelder: **Buchal, Heinz**
**Julius-Bauser-Strasse 2**
**D-7246 Empfingen(DE)**

(72) Erfinder: **Buchal, Heinz**
**Julius-Bauser-Strasse 2**
**D-7246 Empfingen(DE)**

(74) Vertreter: **Ott, Elmar, Dipl.-Ing.**
**Kappelstrasse 8**
**D-7240 Horb 1(DE)**

(54) **Befestigungselement fur Fussmatten.**

(57) Die Erfindung bezieht sich auf ein Befestigungselement für Fußmatten, welches aus einem unteren, scheibenförmigen Befestigungsteil (1) und einem oberen Befestigungsteil (2) besteht. Das obere Befestigungsteil (2) bildet einen zylindrischen Zapfen, der in ein Loch an der zu befestigenden Fußmatte eingreift. Das untere Befestigungsteil (1) besitzt nach unten abgebogene Befestigungsfinger (4, 5) die in die im Fußraum vorhandene Auslegeware eingedreht werden können. Mit dem Befestigungselement ist auf einfache Weise eine sichere Befestigung von Fußmatten in Fußraum vom Kraftfahrzeugen möglich.

FIG.1

EP 0 211 966 A1

## Befestigungselement für Fußmatten

Die Erfindung bezieht sich auf ein Befestigungselement für Fußmatten gemäß Oberbegriff des Hauptanspruchs. Die im Fußraum von Kraftfahrzeugen, insbesondere im Bereich der Pedale befindlichen Fußmatten, sollten aus Sicherheitsgründen stets gegen Verrutschen gesichert sein. Bei bekannten Fußmatten sind zu diesem Zweck Druckknopf-Befestigungen vorgesehen, bei denen der eine Teil der Druckknöpfe auf der den Innenboden überdeckenden Auslegeware befestigt ist, während der andere Teil der Druckknöpfe auf der Unterseite der Fußmatten angeordnet ist. Das Anbringen dieser bekannten Befestigungselemente ist jedoch verhältnismäßig schwierig, da eine genaue Übereinstimmung der unteren und oberen Druckknopfteile ein genaues Vermessen oder die Verwendung einer Montageschablone erfordert.

Der Erfindung liegt die Aufgabe zugrunde, ein Befestigungselement für Fußmatten zu schaffen, welches auf einfache Weise an der im Fußraum ohnehin vorhandenen Auslegeware befestigt werden kann.

Die Lösung dieser Aufgabe wird durch die im Hauptanspruch angegebenen Merkmale erhalten. Für die Anbringung des Befestigungselements im Fußraum wird dieses lediglich mit seinen spitz zulaufenden Befestigungsfingern auf der Auslegeware aufgesetzt und in Richtung der vorzugsweise kreisbogenförmig angeordneten Befestigungsfinger gedreht. Das Befestigungselement wird so weit um die Mittelachse gedreht, bis die Befestigungsfinger vollständig in die Auslegeware eingedrungen sind. Zwischen den Befestigungsfingern und dem übrigen scheibenförmigen Bereich des unteren Befestigungsteils besteht ein Abstand, der etwas kleiner ist als die Dicke der Auslegeware, so daß zwischen Befestigungsfinger und dem scheibenförmigen Bereich die Auslegeware eingeklemmt wird. Durch diese Klemmwirkung wird das Befestigungselement gegen selbsttätiges Lösen gesichert.

Es sind jedoch vorzugsweise noch zusätzliche Rastspitzen am unteren Befestigungsteil vorgesehen, die ein selbsttätiges Herausdrehen sicher vermeiden. Zu diesem Zweck kann auch die Spitze der Befestigungsfinger geringfügig nach unten geneigt sein, wodurch gleichzeitig auch beim Hineindrehen des Befestigungselements ein besseres Eingreifen und Eindringen in die Auslegeware erzielt wird.

Es sind vorzugsweise zwei äußere, gegenüberliegende Befestigungsfinger am unteren Befestigungsteil vorgesehen, die aus dem tellerförmigen Bereich ausgestanzt und nach unten in gewünschter Weise abgebogen sind. Der größte Teil der Befestigungsfinger verläuft parallel zu dem übrigen tellerförmigen Bereich des unteren Befestigungsteils. In dem gebogenen Bereich, der die Verbindung zwischen Befestigungsfinger und dem übrigen waagrechten Bereich des Befestigungsteils bildet, sind vorzugsweise zusätzliche Verstärkungsrippen ausgeprägt, mit denen die Befestigungsfinger zusätzlich verstärkt und stabilisiert werden.

Das obere Befestigungsteil ist mit dem unteren Befestigungsteil drehfest verbunden. Dies kann beispielsweise dadurch erzielt werden, daß zur Befestigung des oberen Befestigungsteils im unteren Befestigungsteil eine rechteckige Öffnung vorgesehen ist, in die das obere Befestigungsteil eingepaßt ist. Das obere Befestigungsteil, welches als zylindrischer Zapfen ausgebildet sein kann, besitzt eine Einrichtung zum Ansetzen eines Werkzeugs, mit dem die Befestigungsfinger in einen Teppichboden oder eine andere Auslegeware eingedreht werden können. Um hohe Torsionskräfte auf das Befestigungselement übertragen zu können, ist es vorteilhaft, den zylindrischen Zapfen mit einer derart konisch ausgebildeten Öffnung zu versehen, die an die Form einer Schraubendreherspitze angepaßt ist. Selbstverständlich besteht auch die Möglichkeit, die Öffnung an einen Inbusschlüssel anzupassen oder die äußere Form des zylindrischen Zapfens wenigstens teilweise entsprechend dem äußeren Profil einer Schraubenmutter auszubilden.

Der zylindrische Zapfen greift zur Befestigung der zugehörigen Fußmatte in eine an dieser vorgesehene Öffnung oder Durchführung ein. Damit die Fußmatte nicht ohne weiteres vom Zapfen abgehoben werden kann, besitzt dieser an seinem oberen Ende einen nach außen abstehenden Rand.

Die Befestigungsfinger können zur Befestigung an herkömmlichen Teppichböden oder Auslegewaren, wie sie im Fußraum von Kraftfahrzeugen verwendet werden, ungefähr 1 bis 4 mm gegenüber dem scheibenförmigen Bereich abgesenkt sein und eine Länge von 2 -4 cm haben. die Wandungsstärke des einstückigen unteren Befestigungsteils kann dabei zwischen 0,4 und 1 mm liegen. Der Durchmesser des Befestigungsteils kann dabei beispielsweise zwischen 3 und 5 cm betragen.

Die Erfindung wird nachfolgend anhand der Zeichnungen näher erläutert. Es zeigen:

Figur 1 eine perspektivische Ansicht eines erfindungsgemäßen Befestigungsteils,

Figur 2 die Draufsicht des in Figur 1 dargestellten Befestigungsteils und

Figur 3 das Befestigungsteil von Figur 2 entlang der Schnittlinie AB.

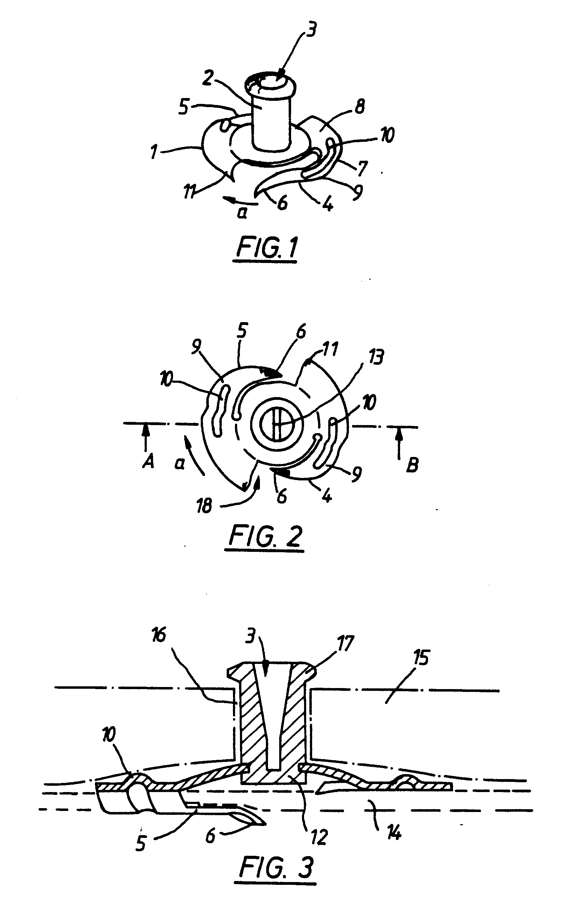

Das in Figur 1 dargestellte Befestigungselement besteht aus einem unteren, im wesentlichen waagrechten oder scheibenförmigen Befestigungsteil 1 und einem oberen Befestigungsteil 2, welches einen im wesentlichen zylindrischen Zapfen bildet. Das obere Befestigungsteil 2 ist drehfest mit dem unteren Befestigungsteil 1 verbunden und besitzt eine Öffnung 3, die sich nach innen konisch verjüngt. In Figur 3 ist die Form der Öffnung 3 im Schnitt dargestellt.

Am unteren Befestigungsteil 1, welches vorzugsweise aus einer gehärteten Stahlblechscheibe besteht, sind zwei gegenüberliegende Befestigungsfinger 4, 5 angeformt, die an ihren Spitzen 6 nach unten abgebogen sind. Im Bereich des Übergangs 7 zwischen dem waagerechten Teil 8 des scheibenförmigen Bereichs und dem waagerechten Teil 9 der Befestigungsfingers 4, 5 ist jeweils eine Verstärkungsrippe 10 ausgeprägt.

Die Montage des Befestigungselementes erfolgt nun dadurch, daß das Befestigungselement mit den Spitzen 6 auf den im Fußraum ausgelegten Teppichboden aufgesetzt und in Drehrichtung a so weit gedreht wird, bis die Befestigungsfinger 4, 5 vollständig in den Teppichboden eingedrungen sind. Eine am scheibenförmigen Bereich des unteren Befestigungsteils 1 angeformte Rastspitze 11 sichert das Befestigungselement gegen ein unbeabsichtigtes Lösen entgegen der Drehrichtung a. Das Eindrehen des Befestigungselements erfolgt im dargestellten Ausführungsbeispiel mittels eines Schraubendrehers, dessen vordere Spitze entsprechend der konisch ausgebildeten Öffnung 3 geformt ist. Das obere Bestigungsteil 2 kann dabei aus Kunststoff bestehen und in eine rechteckige Öffnung 12 (Figur 3) am unteren Befestigungsteil 1 drehfest eingesetzt sein.

In Figur 2 ist erkennbar, daß sich die Öffnung 3 nach unten zu einem Schlitz 13 verjüngt. Der Schnitt entsprechend der Schnittlinie AB ist in Figur 3 dargestellt.

In Figur 3 ist das Befestigungselement vergrößert dargestellt und die Auslegeware 14 sowie die zu befestigende Fußmatte 15 sind mit unterbrochenen Linien angedeutet. Die Fußmatte 15 besitzt zur Aufnahme des oberen Befestigungsteils 2 ein Loch 16, welches in seinem Durchmesser an den Außendurchmesser des zylindrischen Zapfens angepaßt ist. Am oberen Ende des zylindrischen Zapfens, der das Befestigungsteil 2 bildet, befindet sich ein Rand 17, der die Fußmatte 15 gegen Herausrutschen sichert.

Das in der Zeichnung dargestellte Ausführungsbeispiel eines erfindungsgemäßen Befestigungselements kann je nach Anwendungsfall auch abgewandelt werden. Je nach Beschaffenheit der Auslegeware können auch mehrere gleichmäßig am Umfang verteilte Befestigungsfinger vorgesehen sein. Die Befestigungsfinger 4, 5 können auch in ihrer Länge und Form den jeweiligen Anforderungen entsprechend abgewandelt werden. Es wird auch noch angemerkt, daß insbesondere in der Draufsicht von Figur 2 im Bereich der Spitzen 6 eine Aussparung 18 erkennbar ist, die je nach Dicke der Auslegeware 14 größer oder kleiner ausgebildet sein kann.

## Ansprüche

1. Befestigungselement für Fußmatten (15) oder dergleichen, insbesondere zur Sicherung der im Fußraum befindlichen Automatten gegen Verrutschen, mit einem unteren Befestigungsteil (1) zur ortsfesten Befestigung des Befestigungselements an der im Fußraum vorhandenen Auslegeware (14) und mit einem oberen Befestigungsteil (2), an dem die zu sichernde Fußmatte (15) zu befestigen ist, **dadurch gekennzeichnet**, daß das untere Befestigungsteil (1) einen zumindest annähernd waagerechten, scheibenförmigen Bereich (8) hat, an den spitz zulaufende Befestigungsfinger (4, 5) angebracht sind, die gegenüber dem scheibenförmigen Bereich (8) nach unten abgesenkt sind und im Abstand von der Mitte des unteren Befestigungsteils (1) kreisbogenförmig oder tangential verlaufen.

2. Befestigungselement nach Anspruch 1, **dadurch gekennzeichnet**, daß die Spitze (6) der Befestigungsfinger (4, 5) nach unten geneigt ist und sich an die Spitze (6) jeweils ein waagerechter Bereich (9) anschließt, der gegenüber dem waagerechten, scheibenförmigen Bereich (8) parallel nach unten versetzt ist.

3. Befestigungselement nach einem der Ansprüche 1 oder 2, **dadurch gekennzeichnet**, daß die Befestigungsfinger (4, 5) am unteren Befestigungsteil (1) angeformt sind, wobei die Form der Befestigungsfinger (4, 5) aus einem tellerförmigen unteren Befestigungsteil (1) ausgestanzt ist.

4. Befestigungselement nach einem der vorhergehenden Ansprüche, **dadurch gekennzeichnet**, daß das obere Befestigungsteil (2) mit dem unteren Befestigungsteil (1) drehfest verbunden ist und eine Einrichtung zum Ansetzen eines Schraubendrehers, eines Schraubenschlüssels oder eines Inbusschlüssels hat.

5. Befestigungselement nach einem der vorhergehenden Ansprüche, **dadurch gekennzeichnet**, daß das obere Befestigungsteil (2) ein zylindrischer, vom unteren Befestigungsteil (1) nach oben senkrecht abstehender Zapfen ist, der innen eine von oben nach unten sich konisch verjüngende Öffnung (3) hat, die an die Form einer Schraubendreherspitze angepaßt ist.

6. Befestigungselement nach einem der Ansprüche 4 oder 5, **dadurch gekennzeichnet**, daß das obere Befestigungsteil (2) an seinem oberen Ende einen nach außen abstehenden Rand (17) hat.

7. Befestigungselement nach einem der vorhergehenden Ansprüche, **dadurch gekennzeichnet**, daß am scheibenförmigen Bereich (8) des unteren Befestigungsteils (1) nach unten abgebogene Rastspitzen (11) angeformt sind, die das montierte Befestigungselement gegen Herausdrehen sichern.

8. Befestigungselement nach einem der vorhergehenden Ansprüche, **dadurch gekennzeichnet**, daß der scheibenförmige Bereich (8) des unteren Befestigungsteils (1) oberhalb der Spitzen (6) der Befestigungsfinger (4, 5) jeweils eine Aussparung (18) hat.

9. Befestigungselement nach einem der vorhergehenden Ansprüche, **dadurch gekennzeichnet**, daß die Befestigungsfinger (4, 5) 1 -4 mm gegenüber dem scheibenförmigen Bereich (8) abgesenkt sind.

10. Befestigungselement nach einem der vorhergehenden Ansprüche, **dadurch gekennzeichnet**, daß das untere Befestigungsteil (1) aus gehärtetem Stahl besteht und eine Wandungsstärke von 0,4 -1 mm und einen Durchmesser von 3 -5 cm hat, und daß die Befestigungsfinger (4, 5) eine Länge von 2 -4 cm haben.

0 211 966

*FIG. 1*

*FIG. 2*

*FIG. 3*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 058 252 (WEGU) | | B 60 N 3/04 |
| | --- | | A 47 G 27/04 |
| A | FR-A-2 514 628 (FRANK) | | |
| | --- | | |
| A | FR-A-1 405 310 (S.E.D.A.D.) | · | |
| | --- | | |
| A | FR-E- 92 613 (S.E.D.A.D.) | | |
| | --- | | |
| A | FR-E- 34 722 (VIGIER) | | |
| | --- | | |
| A | GB-A-2 087 229 (KATO) | | |
| | --- | | **RECHERCHIERTE SACHGEBIETE (Int. Cl.4)** |
| A | DE-A-2 553 599 (NISSAN) | | A 47 G 27/00 |
| | --- | | B 60 N 3/00 |
| A | FR-A- 808 533 (FERNBERG) | | B 62 D 25/00 |
| | | | B 60 R 13/00 |
| | ----- | | F 16 B 25/00 |

Der vorliegende Recherchenbericht wurde für alle Patentansprüche erstellt.

| Recherchenort | Abschlußdatum der Recherche | Prüfer |
|---|---|---|
| DEN HAAG | 13-12-1985 | HORVATH R.C. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82